(19) **Europäisches Patentamt**
**European Patent Office**
**Office européen des brevets**

(11) **EP 1 496 281 B1**

(12) **EUROPEAN PATENT SPECIFICATION**

(45) Date of publication and mention
of the grant of the patent:
**14.03.2007 Bulletin 2007/11**

(51) Int Cl.:
**F16D 48/06** (2006.01)

(21) Application number: **04015623.4**

(22) Date of filing: **02.07.2004**

(54) **Clutch control device**

Kupplungssteuerungsvorrichtung

Dispositif pour contrôler un embrayage

(84) Designated Contracting States:
**DE FR GB**

(30) Priority: **07.07.2003 JP 2003192703**

(43) Date of publication of application:
**12.01.2005 Bulletin 2005/02**

(73) Proprietor: **AISIN SEIKI KABUSHIKI KAISHA**
**Kariya-shi, Aichi-ken (JP)**

(72) Inventors:
• **Mineno, Akira**
**Aisin Seiki K.K.**
**Intell. Prop. Dep.**
**Kariya-shi**
**Aichi-ken 448-8650 (JP)**
• **Terakawa, Tomomitsu**
**Aisin Seiki K.K., I.P.D.**
**Kariya-shi**
**Aichi-ken 448-8650 (JP)**
• **Watanabe, Hideo**
**Toyota-shi**
**Aichi-ken 471-8571 (JP)**

• **Monji, Fuminori**
**Toyota-shi**
**Aichi-ken 471-8571 (JP)**
• **Nishizawa, Jun**
**Toyota-shi**
**Aichi-ken 471-8571 (JP)**
• **Otsubo, Hideaki**
**Toyota-shi**
**Aichi-ken 471-8571 (JP)**
• **Inoue, Takashi**
**Toyota-shi**
**Aichi-ken 471-8571 (JP)**

(74) Representative: **Kramer - Barske - Schmidtchen**
**European Patent Attorneys**
**Patenta**
**Radeckestrasse 43**
**81245 München (DE)**

(56) References cited:
**EP-A- 0 760 442       DE-A- 10 237 793**
**US-A1- 2002 134 637**

**Description**

FIELD OF THE INVENTION

This invention generally relates to a clutch control device. More particularly, this invention pertains to a clutch control device, which changes a clutch torque by controlling an actuator.

BACKGROUND

An automated system has been known wherein an actuator is attached to an existing manual transmission to make a sequence of gear shifting operation (namely, engaging / disengaging of a clutch, gear shift, and gear selection) according to driver's intent or condition of a vehicle. For example, this kind of an automated system is disclosed in Japanese Patent Laid-Open Publication 2003-56600.

In this system, for example, the clutch is controlled by a clutch stroke. The clutch stroke is a control amount of the actuator for clutch use and is transformed from transmission torque (clutch torque) between a flywheel and a clutch disk which is required according to vehicle characteristics. To transform from transmission torque to the clutch stroke, a clutch torque map is used.

The clutch torque map generally shows a relationship which is statically obtained from cushioning property of the clutch disk. This relationship is considerably influenced by dynamic variable modulus such as abrasion of a clutch facing, variation of friction coefficient $\mu$ due to heat generation, aged deterioration. Therefore, the present applicant had proposed correction method of the clutch torque map wherein the system learns relationship between actual clutch torque and predetermined clutch stroke (an example of the system is disclosed in Japanese Patent Laid-Open Publication 2004-138176).

In the disclosed learning correction method, calculation is essentially conducted for a clutch torque correction modulus so as to moderate deviation between a set value and an actual value of clutch torque at predetermined clutch stroke. With assuming that the deviation between the set value and the actual value at arbitrary clutch torque shows equivalent trend as the difference in the above described predetermined clutch stroke, moderation of the deviation for entire clutch torque is carried out by multiplying the set value and the clutch torque correction modulus.

Accordingly, clutch torque may deviate from the above mentioned trend in response to selection of predetermined clutch stroke used to calculate a clutch torque correction modulus. Therefore, further effective moderation method is needed to moderate deviation between the set value and the actual value.

EP-A-0 760 442 discloses a starting clutch control system for controlling a starting clutch, which is arranged between an engine and at least one wheel of a vehicle. A basic torque capacity of the starting clutch is calculated based on the rotational speed of the engine. A torque capacity correction value is determined such that is assumes a minimal value when a clutch speed ratio of the starting clutch is equal to 1.0 and progressively increases as the clutch speed ratio increases and decreases from 1.0. The determined torque capacity correction value is changed based on the throttle valve opening, and the torque capacity of the starting clutch is determined based on the changed torque capacity correction value and the calculated basic torque capacity. The system does not provide a map which shows a relationship between a control amount, e.g. a hydraulic pressure, supplied to the clutch, and an actually transmitted torque.

US 2002/0134637 A1 discloses a method of controlling of various automatic transmissions measuring and using changes and the time of parameters such as a engine rotation speed and a transmission torque at various automatic transmissions. A torque transmission system transmits torque from an engine to a cone pulley gearbox and comprises at least one component adapted to transmit torque, wherein the torque transmission system is controlled in such a way that the torque which can be transmitted by the torque transmission system is always less than the torque which can be transmitted by the cone pulley gearbox. The system does not disclose a map which shows a relationship between the control amount for controlling the system and the actually transmitted torque, which is a key feature of the invention.

DE 102 37 793 A discloses a control method for controlling a friction clutch such that a predetermined clutch torque can be transmitted. The predetermined clutch torque is the sum of a precontrolled clutch torque and a clutch torque, which depends on the slip of the clutch. Also D3 does not disclose a map, which shows a relationship between the control amount for controlling the clutch and the actually transmitted torque.

SUMMARY OF THE INVENTION

It is an object of the invention to provide a clutch control device which allows to efficiently moderate a deviation between the set value and the actual value of a clutch torque.

A solution of this object is achieved by a clutch control device according to appended claim 1, which preamble starts from Japanese patent Laid-Open publication 2003-56600, which has been discussed above.

The appended sub-claims are directed towards advantageous embodiments of the inventive clutch control device.

According to an aspect of the present invention, a clutch control device configured to obtain a target clutch torque by controlling an actuator to a target control amount based on a clutch torque map formed by a clutch torque and a control amount of the actuator, is characterized in that the clutch control device including a first calculation means for calculating a first correction modulus indicating a deviation between the target clutch torque and an estimated clutch torque which is outputted when the actuator is activated to obtain the target control amount under a predetermined condition, a second calculation means for calculating a second correction modulus for each predetermined clutch torque based on the first correction modulus and a reflection rate defined by a deviation from a predetermined point on the clutch torque map as a reference point, and a correction means for correcting the clutch torque map by correcting each control amount of the actuator corresponding to each predetermined clutch torque based on the second correction modulus of each predetermined clutch torque.

According to this configuration, calculation is executed to obtain the first correction modulus indicating difference between the target clutch torque and the estimated clutch torque. Then, the second correction modulus is calculated for each predetermined clutch torque based on the first correction modulus and the deviation from the predetermined point existing on the clutch torque map as the reference point. The clutch torque map is corrected by correcting each control amount of the actuator corresponding to the predetermined clutch torque based on the second correcting modulus of each predetermined clutch torque. The target control amount of the actuator corresponding to the target clutch torque is estimated based on corrected clutch torque map, and the actuator is activated with controlling the target control amount. Therefore, clutch torque is controlled corresponding to its property change.

It is preferable that the correction means corrects the clutch torque map by setting a limit to gradient of the clutch torque map formed between each adjacent predetermined clutch torque.

According to this configuration, since the limit is set to the gradient of the clutch torque map formed between each adjacent target clutch torque at correction of the clutch torque map, for example, it is assured that the clutch stoke (target control amount) is monotonously increased with increasing the clutch torque. In this case, uncomfortable feeling (wherein the clutch stroke is not increased though the clutch is engaged) is prevented.

It is preferable that the first calculation means calculates the first correcting modulus by using the control amount of the actuator based on the clutch torque map corresponding to an average of the target clutch torque in a predetermined time period and the control amount of the actuator based on the clutch torque map corresponding to an average of the estimated clutch torque outputted when the actuator is activated and controlled to obtain the target control amount.

According to this configuration, the first correction modulus is calculated from the control amount of the actuator based on the clutch torque map corresponding to the average of the target clutch torque in the predetermined time period and the control amount of the actuator based on the clutch torque map corresponding to the average of the estimated clutch torque outputted when the actuator is activated and controlled to obtain the target control amount. Therefore, it prevents correction of the clutch torque map caused by temporal deviation between the target clutch torque and the estimated clutch torque.

It is preferable that the first correction modulus is calculated when an engine rotates with a predetermined rpm for a predetermined time period.

According to this configuration, calculation of the first correcting modulus is not executed in unsteady state, and incorrect correction of the clutch torque map is prevented.

It is preferable that the clutch control device comprises a correction means for correcting a deviation from the predetermined point of the actual map in response to the clutch torque value at the predetermined point.

According to this configuration, the deviation is corrected in response to the clutch torque value at the predetermined point. The deviation may change effectiveness to the second correction modulus used to correction of the predetermined point in response to the clutch torque value at predetermined point even if distance from the predetermined point is equivalent. Thus, by correcting the deviation in response to value at the predetermined point, variation of effectiveness to the second correction modulus (namely, effectiveness to clutch torque map) in response to the clutch torque value at the predetermined point is moderated.

It is preferable that correction of the clutch torque map is calculated when a clutch is completely engaged or completely disengaged.

According to this configuration, correction of the clutch torque map is executed at a condition which does not influence clutch controlling (completely engaged condition or completely disengaged condition).

BRIEF DESCRIPTION OF THE DRAWINGS

The foregoing and additional features and characteristics of the present invention will become more apparent from the following detailed description considered with reference to the accompanying drawings, wherein:

FIG. 1 illustrates a diagram of a vehicle control system in accordance with a first embodiment of the present invention;

FIG. 2 illustrates a graph (map) which shows relationship between clutch torque and clutch stroke;

FIG. 3 illustrates a graph (map) which shows relationship between deviation from learning point and reflection rate;

FIG. 4 illustrates graphs (maps) which show a convergence process of clutch torque map from reference map to learning map;

FIG. 5 is a flow chart for explaining operation of ECU in accordance with a first embodiment of the present invention;

FIG. 6 is a flow chart for explaining operation of ECU in accordance with a first embodiment of the present invention;

FIG. 7 is a flow chart for explaining operation of ECU in accordance with a first embodiment of the present invention;

FIG. 8 is a flow chart for explaining operation of ECU in accordance with a first embodiment of the present invention;

FIG. 9 is a flow chart for explaining operation of ECU in accordance with a first embodiment of the present invention;

FIG. 10 is a flow chart for explaining operation of ECU in accordance with a first embodiment of the present invention;

FIG. 11 illustrates graph (map) which shows a convergence process of clutch torque map from reference map to learning map;

FIG. 12 illustrates graph (map) which shows a convergence process of clutch torque map from reference map to learning map in accordance with a second embodiment of the present invention;

FIG. 13 illustrates a graph (map) which shows relationship between deviation from learning point and reflection rate; and

FIGS. 14(a), 14(b) and 14(c) illustrate graphs showing relationship between maximum reflection rate, minimum reflection rate and reflection distance and learning point.

DETAILED DESCRIPTION

A preferred embodiment of the present invention will be described hereinbelow in detail with reference to the accompanying drawings.

(First embodiment)

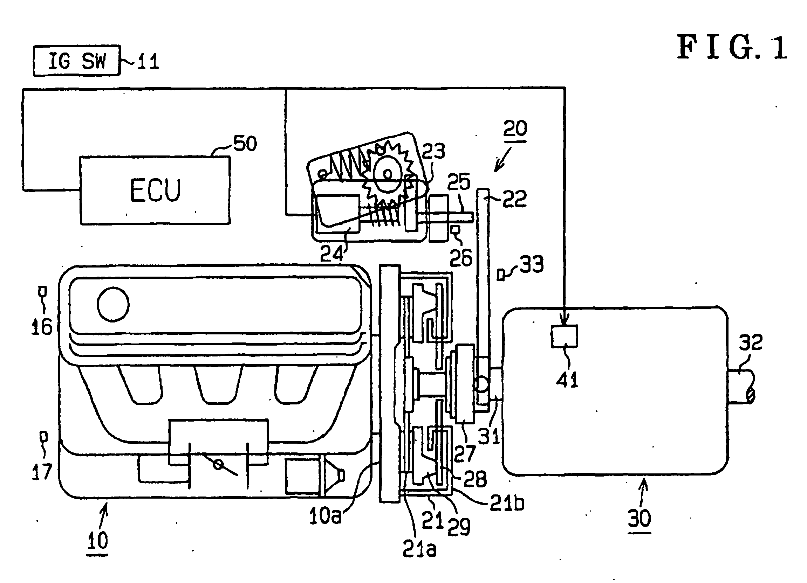

Hereinafter, a first embodiment according to the present invention will be explained. FIG. 1 shows a schematic view of a vehicle control system wherein a clutch control device according to the first embodiment of the present invention is applied. In this vehicle control system, an automatic clutch mechanism 20 is provided to a flywheel 10a which is integrally attached and rotated with an output shaft (crank shaft) of an engine (combustion engine) 10. An automatic transmission mechanism 30 is connected to the output shaft of the engine 10 via the automatic clutch mechanism 20.

The engine 10 is connected to an ignition switch 11 for igniting the engine 10, an engine rotation sensor 16 for detecting engine rotation rpm Ne, and an engine water temperature sensor 17 for detecting engine water temperature Tw.

The automatic clutch mechanism 20 includes a mechanical (dry single plate type) friction clutch 21, a clutch lever 22, and a clutch actuator 23 which serves as an actuator for controlling a rotation transmission condition conducted by the friction clutch 21 via the clutch lever 22.

The friction clutch 21 includes a clutch disc 21a which integrally rotates with input shaft 31 of the automatic transmission mechanism 30 placed at opposite side of the flywheel 10a. The friction clutch 21 changes the rotation transmission condition between the flywheel 10a and the clutch disk 21a (between the output shaft of the engine 10 and the input shaft 31) with changing pushing load of the clutch disk 21a to the flywheel 10a. This transmittable torque between the flywheel 10a and the clutch disk 21a is defined as clutch torque. Since the clutch torque is controlled in response to vehicle condition, smooth starting and exact acceleration is obtained.

The clutch actuator 23 includes a direct electric current motor 24 as an actuator. The motor 24 drives a rod 25 to move forward and backward direction, and the clutch lever is moved cooperatively. Accordingly, a release bearing 27 is pushed via the clutch lever 22, the release bearing 27 deforms a diaphragm spring 28 contacted to the release bearing 27 with generating a biasing force, and the diaphragm spring 28 presses a pressure plate 29 with generating a pushing load. The pressure plate 29 is supported to a cover 21b of the friction clutch 21. The friction clutch 21 integrally rotates with the flywheel 10a. In this manner, the clutch actuator 23 operates the rotation transmission condition of the friction clutch 21.

In concrete terms, when the rod 25 is moved to forward direction and the clutch lever 22 is pushed to the right direction in FIG.1, the pushing load of the clutch disk 21a to the flywheel 10a is decreased. On the other hand, when the rod 25 is moved to backward direction and the clutch lever 22 is returned from the pushed condition, the pushing load of the clutch disk 21a to the flywheel 10a is increased.

Relationship between displacement of the rod 25 and rotation transmission of the friction clutch 21 will be explained below. When the rod 25 is moved to forward direction, the pushing load of the clutch disk 21a to the flywheel 10a is finally disappeared. In this condition, the flywheel 10a and the clutch disk 21a are separated, and then rotation transmission between the flywheel 10a and the clutch disc 2 la is disappeared. This condition is referred to as completely disengaged condition of the clutch. Additionally, position of the rod 25 is referred to as a standby position. Displacement of the rod 25 corresponding to position of the rod 25 is referred to as a clutch stroke St (control amount).

When the rod 25 is moved from the standby position to backward direction, the pushing load of the clutch disk 21a to the flywheel 10a is increased in response to displacement of the clutch disk 10a. In this condition, the rotation transmission is carried out between the flywheel 10a and the clutch disk 21 a with a rotation difference (slipping quantity) in response to the pushing load. Especially, when the rotation difference (slipping quantity) is almost disappeared by increasing the pushing load according to displacement the rod 25 to backward direction, the flywheel 10a and the clutch disk 21a synchronously rotates. This condition is referred to as completely engaged condition of the clutch. Additionally, the position of the rod 25 is referred to as completely engaging position. Therefore, by controlling displacement of the rod 25 (clutch stroke) from the standby position to a moved position at becoming synchronizing state (engaged condition) using the clutch actuator 23, slipping quantity between the flywheel 10a and the clutch disc 21a is controlled. Hereinafter, a condition wherein displacement of the rod 25 (clutch stroke) is between the standby position and the completely engaging position and slipping is occur between the flywheel 10a and the clutch disk 21 a is referred to as asynchronous condition of the clutch (partially engaged condition).

A stroke sensor 26 for detecting a clutch stroke St is provided to the automatic clutch mechanism 20. The clutch stroke St is used to evaluate condition of rotation transmission of the friction clutch 21.

An example of the automatic transmission mechanism 30 according to the first embodiment of the present invention is a parallel axes type gear pair automatic transmission with 5 speed for forward and 1 speed for backward, and includes the input shaft 31, an output shaft 32, and plural speed change gear train. The input shaft 31 of the automatic transmission mechanism 30 is connected to the clutch disk 21a of the friction clutch 21 so as to transmit power generated at the engine 10. The output shaft 32 is connected to an axle (not shown in figures) so as to transmit power generated at the engine 10. At the input shaft 31, a rotation sensor 33 is provided so as to detect rotation rpm of the input shaft 31 (input shaft rotation rpm Ni). The automatic transmission mechanism 30 includes a transmission actuator 41 so as to control shift change of the gear train which can transmit power generated at the engine 10. The automatic transmission mechanism 30 is operated to change adequate shift by actuating the transmission actuator 41.

The vehicle control system shown in FIG. 1 includes an electric control unit (ECU) 50 including a first calculating means, a second calculating means, and a correcting means. The ECU 50 is primary organized with a micro computer (CPU), and including a read only memory (ROM) which can store various programs, maps, and so on, a random access memory (RAM) which can read/write various data etc., an electronically erasable and programmable read only memory (EEPROM) which can keep data without backup power supply. The ignition switch 11, various sensors such as the engine rotation sensor 16, the engine water temperature sensor 17, the stroke sensor 26 and the rotation sensor 27, the clutch actuator 23, and the transmission actuator 27 are connected to the ECU 50. The ECU 50 receives detection signals from various sensors, and decides vehicle condition (ON/OFF condition of the ignition switch 11, engine rotation rpm Ne, engine water temperature Tw, clutch stroke St, rotation rpm Ni of the input shaft 31, et. al.) based on detection signals. The ECU 50 activates the clutch actuator 23 and the transmission actuator 41 based on the vehicle information.

More specifically, the ECU 50 adjusts the rotation transmission condition of the friction clutch 21 by activating the clutch actuator 23. Therefore, the rotation transmission condition is automatically controlled using the friction clutch 21 in response to the vehicle condition.

In addition, the ECU 50 changes gear train (shift) which can transmit power at the automatic transmission mechanism 30 by actuating the transmission actuator 41. Therefore, shift position of the automatic transmission mechanism 30 is automatically controlled in response to the vehicle condition.

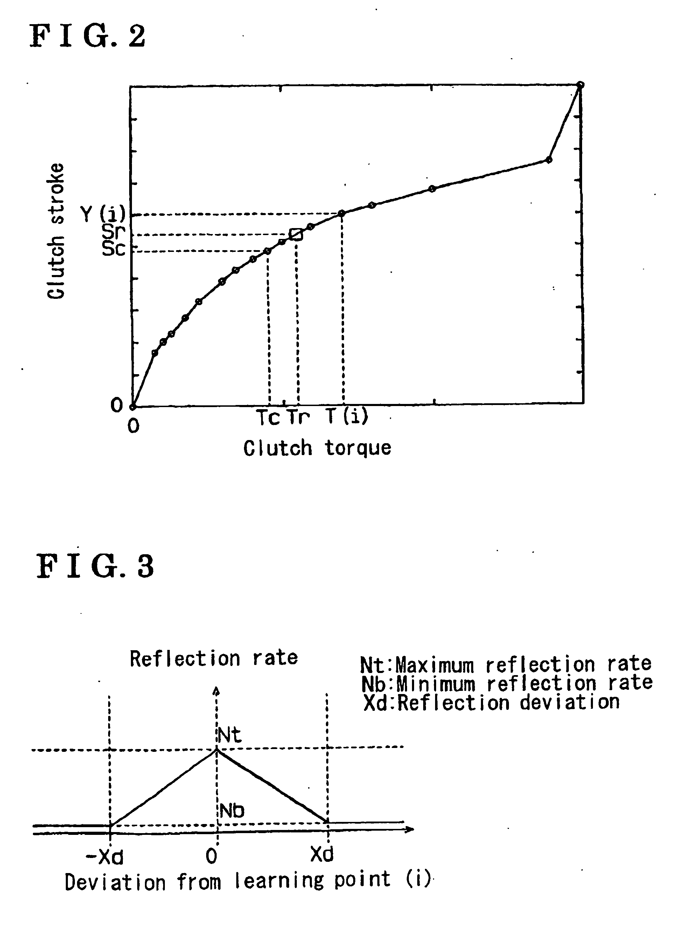

Relationship between the clutch torque and the clutch stroke for controlling the clutch and general description of learning correction of the relationship between the clutch torque and the clutch stroke will be explained here. FIG. 2 shows a clutch torque map showing relationship between above mentioned clutch torque and clutch stroke. In FIG. 2, the standby position corresponds to a clutch stroke wherein the clutch torque is zero. According to this standby position, positive number direction corresponds to a moving distance to the direction of the completely engaging position. Thus, FIG. 2 indicates a relation that the clutch torque is increased with increasing stroke which corresponds to movement of the clutch to the direction of completely engaged condition.

This clutch torque map includes plural map points (coordinate) defined using plural predetermined clutch torque $T(i)$ (wherein i corresponds to integer number) and plural clutch stroke $Y(i)$ corresponds to each predetermined clutch torque $T(i)$, and is formed by linearly interpolating for continuous map points. The predetermined clutch torque $T(i)$ is set to increase with increasing i value. In the first embodiment, since the clutch torque map is alternated (corrected) by correcting all clutch stroke $Y(i)$ corresponding to predetermined clutch torque $T(i)$ with learning, the clutch torque map explained here is a condition until just before next replacement. The clutch torque map is stored in EEPROM of the ECU 50.

Hereinafter, learning process for replacing the clutch torque map will be explained. In this learning process, in partially engaged condition (asynchronous condition) such as starting condition of vehicle moving, an estimated clutch torque Tc_tmp which is considered to be outputted to a target clutch torque Tr_tmp is calculated based on an equation (1):

$$Tc\_tmp = Te - J \times dNe/dt. \qquad (1)$$

Wherein Te corresponds to an engine torque estimated by known method, J corresponds to an engine inertia, Ne corresponds to a rotation rpm of the engine 10 (namely, dNe/dt corresponds to accelerated velocity of rotation rpm of the engine 10). The engine inertia J is a specific designed value for the engine 10.

Calculation of the estimated clutch torque Tc_tmp is conducted under a condition that at least second term of the equation (1) becomes small value. In concrete terms, the estimated clutch torque Tc_tmp is calculated when accelerated velocity of a rotation rpm of the engine dNe/dt is in a predetermined range (namely, in stable condition).

To stabilize a leaning point (learning value), clutch torque at the learning point is defined as an average value (Tr) of the target clutch torque Tr_tmp when the above mentioned condition (namely, at least second term of the equation (1) becomes small value) continues for predetermined time period (that is considered as learning approved condition). This learning point corresponds to a predetermined point described in claims of the present invention. Also, an average value (Tc) of the estimated clutch torque Tc_tmp obtained at this condition (namely, at least second term of the equation (1) becomes small value) is defined as Tc.

Next, the average value (Tc) of the estimated clutch torque Tc_tmp and the average value (Tr) of the target clutch torque Tr_tmp are used to derive corresponding an estimated clutch stroke (Sc) and a target clutch stroke (Sr), respectively. This transformation is conducted using a current clutch torque map in FIG. 2. The ratio of the estimated clutch stroke (Sc) to the target clutch stroke (Sr) is defined as a clutch torque correction rate Kh which serves as a first correction modulus. The clutch torque correction rate Kh is calculated using an equation (2).

$$Kh = Sc/Sr. \qquad (2)$$

According to above explanation, the clutch torque correction rate Kh is calculated based on deriving the estimated clutch stroke (Sc) and the target clutch stroke (Sr) from the average value (Tc) of the estimated clutch torque Tc_tmp and the average value (Tr) of the target clutch torque Tr_tmp, respectively, to make the explanation easy. This process may be conducted using another method. For example, the estimated clutch stroke and the target clutch stroke may be derived from every estimated clutch torque Tc_tmp and every target clutch torque Tr_tmp, respectively, based on current clutch torque map. Accordingly, the clutch torque correction rate Kh may be derived from ratio of an averaged or an integrated value of the estimated clutch stroke and the target clutch stroke within a predetermined time period.

Next, for each predetermined clutch torque T(i), a reflection rate N(i) is calculated with considering a relationship shown in FIG. 3. The reflection rate N(i) is used to reflect the clutch torque correction rate Kh. FIG. 3 shows relationship between a deviation X(i) of each predetermined clutch torque T(i) compared with the clutch torque (Tr) at the learning point and the reflection rate N(i), and this relationship is calculated using an equation (3) with a maximum reflection rate Nt, a minimum reflection rate Nb, and a reflection deviation Xd.

$$N(i) = DIV \cdot X(i) + Nt \qquad (X(i) < Xd).$$

$$N(i) = Nb \qquad (X(i) \geq Xd). \qquad (3)$$

$$DIV = -(Nt - Nb)/Xd.$$

Wherein the maximum reflection rate Nt, the minimum reflection rate Nb, and the reflection deviation Xd are predetermined value (>0), and a DIV corresponds to gradient of the straight line shown as heavy solid line in FIG. 3. The reflection rate N(i) corresponding to the predetermined clutch torque T(i) becomes the maximum reflection rate Nt when the reflection rate N(i) matches clutch torque (Tr) at the leaning point. The reflection, rate N(i) decreased with increasing the deviation X(i) from the learning point until the reflection deviation becomes Xd. After the deviation X(i) exceeds a predetermined value Xd, the reflection rate N(i) becomes constant value (the minimum reflection rate Nb). The maximum reflection rate Nt is set to a value which is smaller than 1.0 to prevent leaning error and drastic change. The minimum reflection rate Nb is set to a constant value which is larger than 0 to realize monotone increasing of a clutch torque map (described later) and, to enhance convergence whole the clutch torque map.

From the reflection rate N(i), a clutch torque correction modulus Kc(i) is calculated using a equation (4). The clutch torque correction modulus Kc(i) is used as a second correction modulus to derive clutch stroke Yb(i) which is alternated as new clutch stroke (Y(i)) corresponding to each predetermined clutch torque T(i).

$$Kc(i) = 1 + (Kh - 1) \cdot N(i). \qquad (4)$$

Above mentioned clutch stroke Yb(i) is derived by multiplying corresponding clutch torque correction modulus Kc to a current clutch stroke Y(i) for each predetermined clutch torque T(i)

Next, to add a limitation to gradient of the clutch torque map formed between predetermined clutch torques T(i), T(i-1) which are adjacent to each other, deviation between clutch strokes Yb(i), Yb(i-1) corresponding to clutch torques T(i), T(i-1) in ascending order and a predetermined minimum gradient YG(i-1) which is set between clutch torques T(i), T(i-1) are compared. If deviation between clutch strokes Yb(i), Yb(i-1) is smaller than the minimum gradient YG(i-1), the clutch stroke Yb(i) is replaced to make the deviation between clutch strokes Yb(i), Yb(i-1) equivalent to the minimum gradient YG(i-1). If deviation between clutch strokes Yb(i), Yb(i-1) is equivalent to the minimum gradient YG(i-1), the clutch stroke Yb(i) is not changed. Calculated clutch stroke Yb(i) is replaced as new clutch stroke Y(i) at completely engaged condition or completely disengaged condition of the clutch (a condition which does not affect clutch control, such as starting control completed condition).

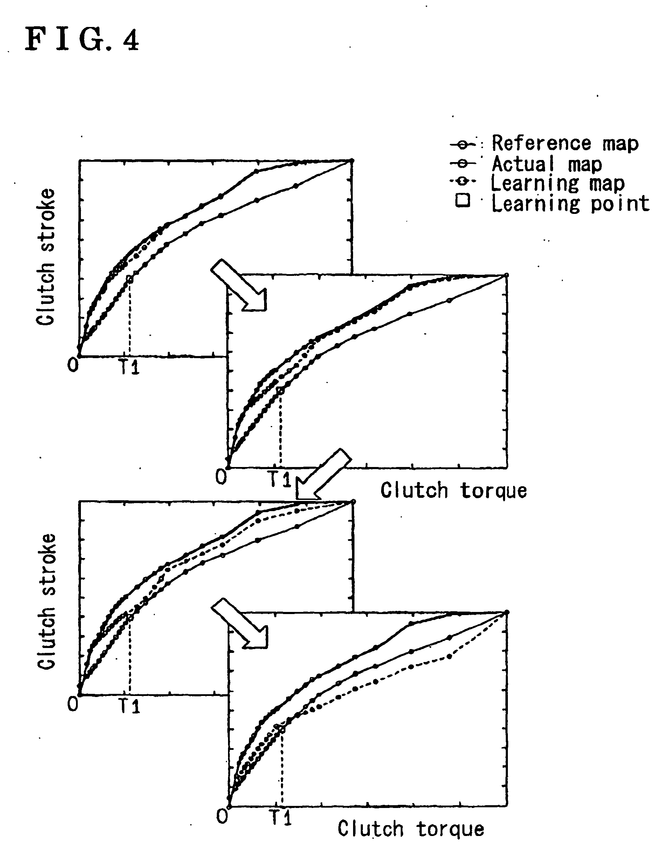

FIG. 4 is a graph showing that the clutch torque map is converged with replacing clutch stroke Y(i) corresponding to predetermined clutch torque T(i) with above described method. In FIG. 4, heavy solid line corresponds to a reference clutch torque map (initial clutch torque map, referred to as reference map in FIG. 4) which is a condition before replacing, and thin solid line corresponds to an actual clutch torque map (referred to as actual map in FIG. 4) which is a target to converge from the reference clutch torque map. In addition, broken line corresponds to a learned clutch torque map (referred to as learning map in FIG. 4) which is converged. Assuming that leaning points continuously exist in the vicinity of a position corresponding to predetermined clutch stroke T1, the leaned points are shown in a square symbol in FIG. 4. As evidenced in FIG. 4, learned clutch torque map is gradually converged to the actual clutch torque map in the vicinity of the learning point. Since infinite learning points can be exist whole range of clutch torque (in concrete terms, wide range of clutch torque corresponding from creep torque to approximately maximum engine torque), same convergence can be conducted whole range of the clutch torque map.

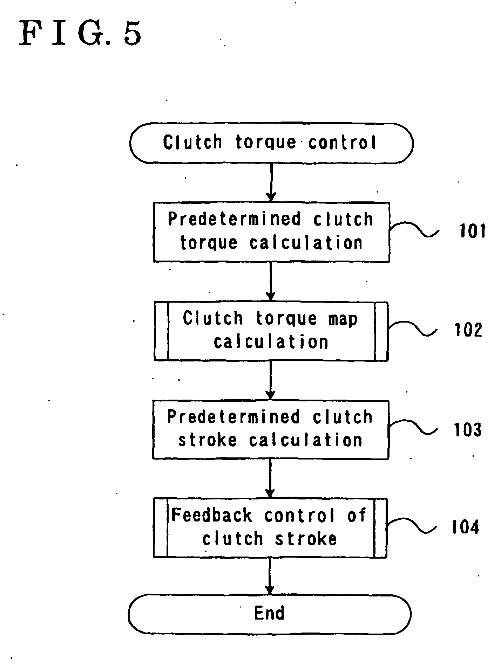

Hereinafter, clutch control process will be explained with reference to flowcharts shown in FIG. 5 - FIG. 10. More particularly, replacement of the clutch torque map (learning correction of Y(i)) and calculation/setting of target clutch stroke torque are executed in the process. This control process is repeatedly executed with regular interruption with respect to each predetermined time while the ignition switch 11 is turned on.

After the process is moved to this routine, the ECU 50 executes predetermined clutch torque calculation at a step 101. Namely, the ECU 50 calculates the target clutch torque Tr_tmp which is adequate to control the clutch in response to vehicle condition based on detection signals from various sensors.

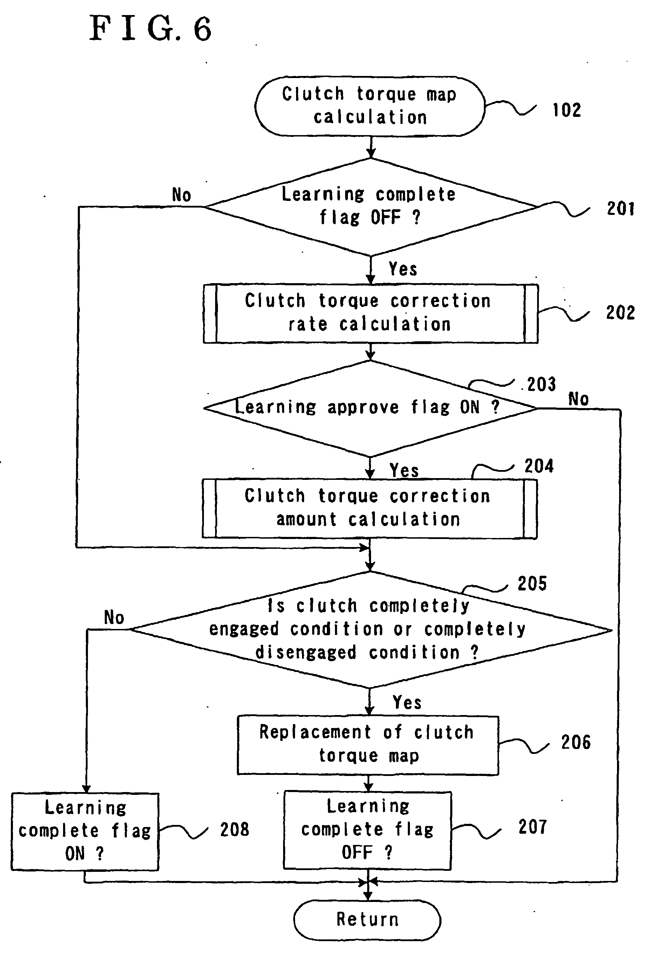

Next, the ECU 50 executes clutch torque map calculation at a step 102. Namely, the process is moved to a step 201 shown in FIG. 6, and the ECU 50 decides whether or not a learning complete flag is OFF. The learning complete flag is set to OFF when the system is in initial condition at startup and replacement of clutch torque map is completed by above mentioned process. In other condition, the learning complete flag is set to ON. In the step 201, if the learning complete flag is decided to OFF, the ECU 50 executes calculation of clutch torque correction rate at a step 202 subroutine. This process (clutch torque correction rate calculation) executes calculation of the clutch torque correction rate Kh and setting of a learning approve flag. Detail of the clutch torque correction rate calculation process (step 202 subroutine) will be explained later. The learning approve flag is a flag which is set to ON when leaning is achieved (namely, a condition wherein calculation of the clutch torque correction rate Kh can be completed) by continuing a condition such as stable condition of engine rotation accelerated velocity dNe/dt while predetermined time period.

After the process of clutch torque correction calculation is executed at step 202, the ECU 50 decides whether or not the learning approve flag is ON at a step 203. At the step 203, if the learning approve flag is decided to ON, the ECU 50 decides calculation of the clutch torque correction rate Kh is completed, and calculation of the clutch torque correction modulus is executed at a step 204 subroutine, then the process is moved to a step 205. This process for calculating the clutch torque correction rate (step 204 subroutine) is executed to calculate the clutch torque correction modulus Kc(i) and new clutch stroke Yb(i) based on the clutch torque correction modulus Kc(i). Details of the step 204 subroutine will be explained later.

On the other hand, if the learning complete flag is not decided to ON (namely, learning complete flag is decided to OFF) at the step 201, the process is directly moved to the step 205 since replacement of clutch torque map is not completed.

At the step 205, the ECU 50 decides whether the clutch is in completely engaged condition or in completely disengaged condition. In concrete terms, the ECU 50 decides whether the clutch is in completely engaged condition or in completely disengaged condition based on the clutch stroke St detected. Alternatively, the ECU 50 may decide whether the clutch is in completely engaged condition or in completely disengaged condition based on deviation between the engine rotation rpm Ne detected and the input shaft rotation rpm Ni detected. In addition, this decision may be executed based on setting condition of vehicle control mode by the ECU 50. If the clutch is decided to completely engaged condition at the step 205, the clutch torque map is replaced at a step 206, and the leaning complete flag is set to OFF at a step 207. On the other hand, if the clutch is decided to disengaged condition at the step 205, the leaning complete flag is set to ON at a step 208. The step 208 is executed to replace the clutch torque map without causing an influence to clutch control (namely, in completely engaged condition or completely disengaged condition).

After setting the learning complete flag at the step 207 or the step 208, the process is moved to a step 103 shown in FIG. 5. Also, at the step 203, if the learning complete flag is decided to OFF, the process is directory moved to a step 103 shown in FIG. 5 since calculation of the clutch torque correction rate Kh is not completed.

The step 102 subroutine is summarized as following process which is executed after replacement of the clutch torque map. Namely, the clutch torque correction rate Kh is calculated under a condition wherein the accelerated velocity of the engine rotation rpm dNe/dt is stable. After that, new clutch stroke Yb(i) corresponding to each predetermined clutch torque T(i) is calculated. Then, replacement of the clutch torque map is executed while the clutch is in the engaged condition or the disengaged condition. The clutch torque map replaced here is set to moderate property change caused by aged deterioration.

Next, at a step 103, the ECU 50 calculates the target clutch stroke Sr_tmp according to the target clutch torque Tr_tmp based on the clutch torque map stored then. The ECU 50 executes feedback control so as to fit detected clutch stroke St to the target clutch stroke Sr_tmp at a step 104, and the process is ended.

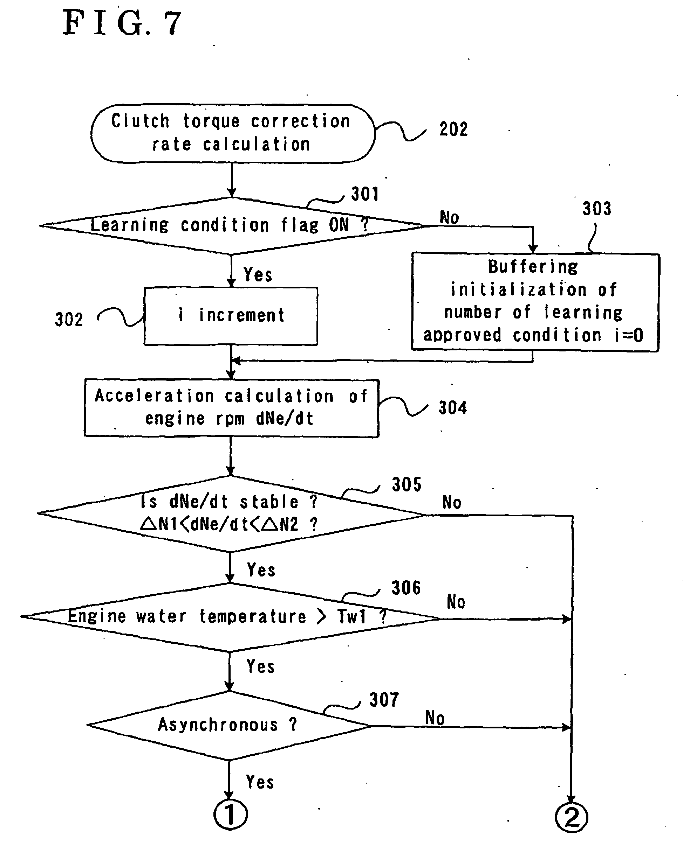

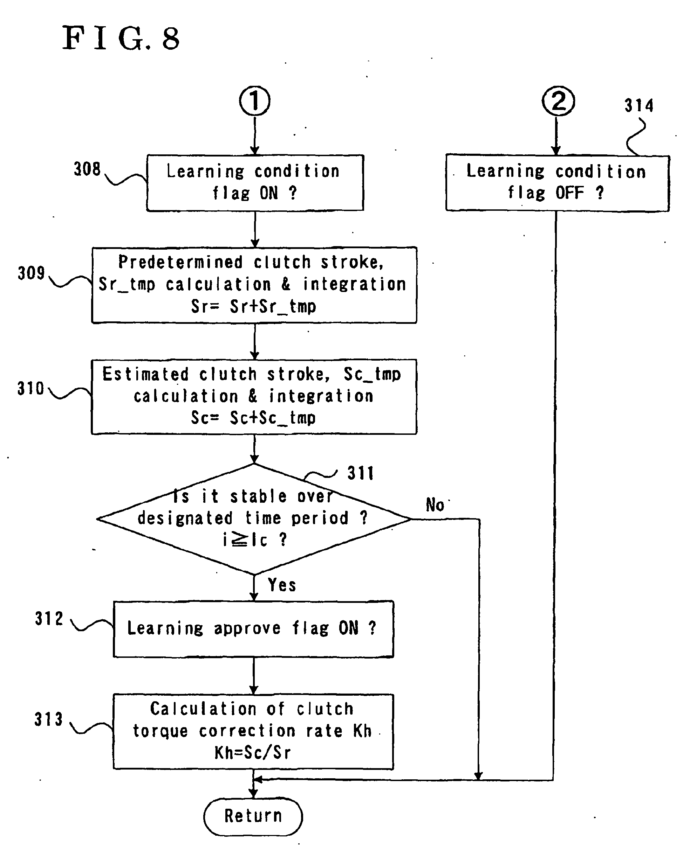

Next, a control process of the clutch torque correction rate calculation at the step 202 subroutine will be explained with reference to FIG. 7 and FIG. 8. After the process is moved to the step 202 subroutine, the ECU 50 decides weather or not a learning condition flag is ON at a step 301. This learning condition flag set to ON if learning condition such as a stable condition of accelerated velocity of the engine rotation rpm is satisfied. If the learning condition flag is set to ON, the ECU 50 increases a timing counter i in increment of 1 at a step 302. If the learning condition flag is set to OFF, the ECU 50 resets the timing counter i to 0 at a step 303. Therefore, the timing counter i indicates number of calculation wherein learning condition is continuously satisfied. A number which is derived by multiplying calculation frequency to the number of calculation (timing counter i) corresponds to time period wherein the learning condition is continuously approved.

After calculation/setting of the timing counter i is executed at the step 302 or the step 303, the ECU 50 calculates accelerated velocity of the engine rotation rpm dNe/dt at a step 304. Then, the ECU 50 decides whether or not the accelerated velocity of the engine rotation rpm dNe/dt is stable. In concrete terms, the decision is executed whether or not the accelerated velocity of the engine rotation rpm dNe/dt is within a range from a predetermined accelerated velocity $\Delta N1(<0)$ to a predetermined accelerated velocity $\Delta N2(>0)$ and absolute value thereof is smaller than absolute value of each predetermined accelerated velocity $\Delta N1$, $\Delta N2$.

If the accelerated velocity of engine rotation rpm dNe/dt is in stable condition, the ECU 50 decides whether or not the engine water temperature Tw is higher than predetermined temperature Tw1 at a step 306. If the engine water temperature Tw is higher than predetermined temperature Tw1 (namely, the engine is not cold condition), the ECU. 50 decides whether or not the clutch is asynchronous condition at a step 307. In the step 307, if the clutch is decided to asynchronous condition, the ECU 50 changes the learning condition flag ON at a step 308 shown in FIG. 8 since the learning condition is satisfied, and the process is moved to a step 309.

At the step 309, the ECU 50 calculates the target clutch stroke Sr_tmp corresponding to the target clutch torque Tr_tmp for the current routine based on current clutch torque map. The target clutch stroke Sr_tmp for the current routine is added to integrated value of the target clutch stroke Sr obtained until the previous routine, and the integrated value Sr is replaced to a new integrated value Sr, and then the process is moved to a step 310. A value which is derived by dividing calculation time into the integrated value of the target clutch stroke Sr has relevance to the clutch stroke corresponding to the average value of the target clutch torque.

At the step 310, the ECU 50 derives the estimated clutch torque Tc_tmp by the equation (1) and the estimated clutch stroke Sc_tmp corresponding to the estimated clutch torque Tc_tmp for the current routine is calculated based on the current clutch torque map. The target clutch torque Tc_tmp for the current routine is added to the integrated value of the target clutch torque Sc obtained until previous routine, and the integrated value Sc is replaced to a new integrated value Sc, and then the process is moved to a step 311. A value which is derived by dividing calculation time into the integrated value of the target clutch torque Sc has relevance to clutch stroke corresponding to average value of the target clutch torque.

Next, at the step 311, the ECU decides whether or not satisfaction of the learning condition continues with stable condition over predetermined time period. In concrete terms, the ECU 50 decides whether or not the timing counter i is exceeding a predetermined value Ic. If the timing counter i is decided to exceed predetermined value Ic, the ECU 50 changes the learning approved flag ON at a step 312. Then, the ECU 50 calculates a ratio of the integrated value of the estimated clutch stroke Sc to the integrated value of the target clutch stroke Sr as the clutch torque correction rate Kh by the equation (2), and the process returns to the routine shown in FIG. 6.

On the other hand, if the timing counter i is decided to under the predetermined value Ic, the process directly returns to the routine shown' in FIG. 6 since learning is not approved.

In addition, if one of conditions decided at steps 305 - 307 is not satisfied, the process moves to a step 314 shown in FIG. 8, and the learning approve flag is changed to OFF. Then, the integrated value of the estimated clutch stroke Sc and the integrated value of tne target clutch stroke Sr are reset to 0, and the process returns to the routine shown in FIG. 6.

In the step 202 subroutine, the clutch torque correction rate Kh is calculated with treating as learning approved when learning condition continues to satisfy over a predetermined time period, or else replacement of the timing counter i and integrated value Sc, Sr is executed until learning is approved.

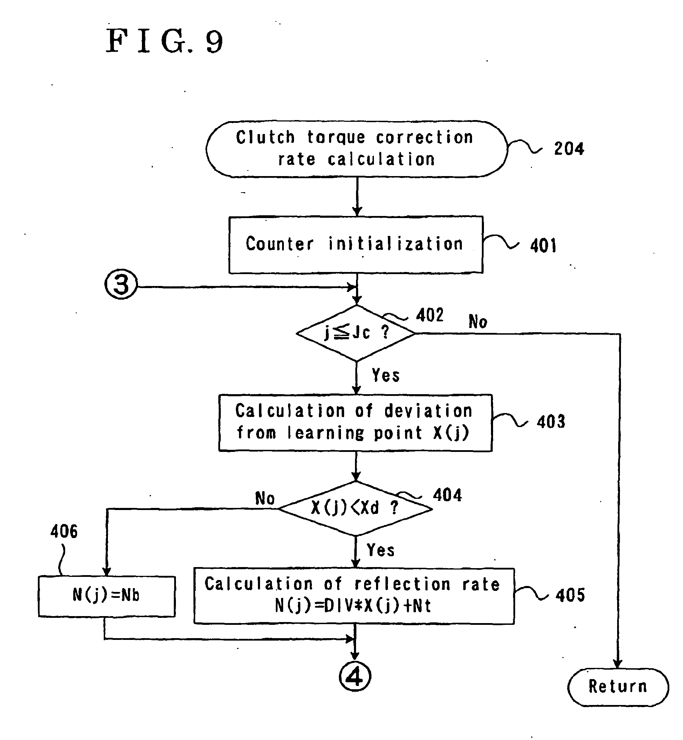

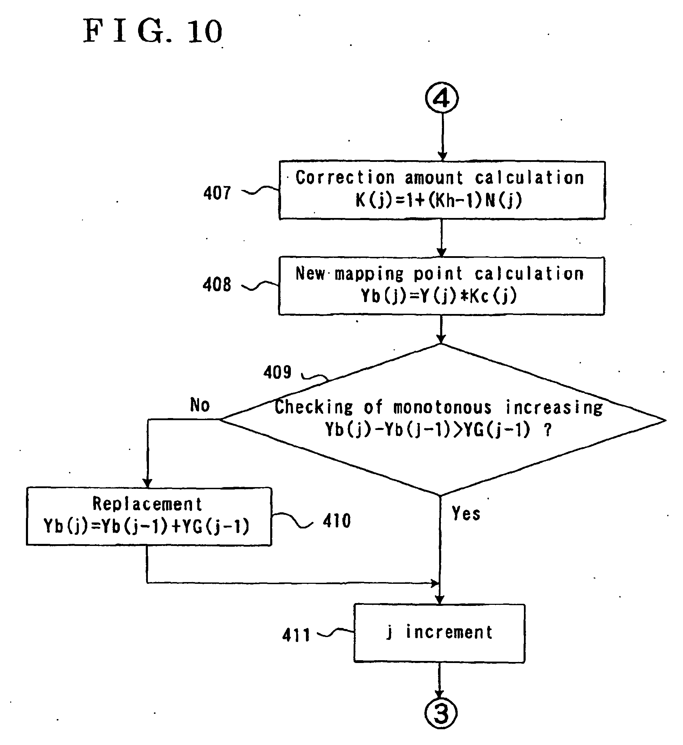

Next, a control process of calculation of the clutch torque correction modulus in the step 204 subroutine will be explained with reference to FIG. 9 and FIG. 10. After the process is moved to the step 204 subroutine, a map point counter j is initialized at a step 401 (namely, the map point counter j is set to j=1). The map point counter j is a modulus used to calculate the clutch torque correction modulus Kc(j) (j is integer number) corresponding to whole the predetermined clutch torque T(j) et al. sequentially.

Next, the ECU 50 decides whether or not the map point counter j is not exceeding predetermined value Jc at a step 402. This predetermined value Jc is a value which is derived by subtracting 1 from data point number of predetermined clutch torque T(j). This is defined because clutch stroke Y(0) corresponding to zero point clutch torque T(0) is not corrected. At the initial stage of the process, since the map point counter j starts from 1, the ECU 50 decides that the map point counter j is not exceeding the predetermined value Jc, and the process is moved to a step 403. Then, the ECU 50 derives the deviation X(j) of each predetermined clutch torque T(j) according to the clutch torque of the learning point. The clutch torque of the learning point is an average value of each target clutch torque Tr_tmp corresponding to derivation of the integrated value of the target clutch stroke Sr. In concrete terms, the clutch torque at the learning point is calculated by dividing the calculation time (Ic) into the integrated value of the target clutch torque calculated until that the above mentioned learning is approved.

Then, the ECU 50 decides whether or not the deviation X(j) is less than the reflection deviation Xd at a step 404. In response to decision, the process is moved to a step 405 or a step 406 wherein the reflection rate N(i) is calculated by the equation (3). Next, the ECU 50 calculates the clutch torque correction modulus Kc(j) by the equation (4).

Next, the ECU 50 calculates the clutch stroke Yb(j) by multiplying the clutch stroke Y(j) of the current clutch torque map and the clutch torque correction modulus Kc at a step 408 shown in FIG. 10. Then, checking of monotonous increasing is executed at a step 409. In concrete terms, a decision is executed whether or not deviation between the clutch stroke Yb(j) corresponding to the target clutch torque T(j) and the clutch stroke Yb(j-1) corresponding to the target clutch torque T(j-1) is exceeding the minimum gradient YG(i-1) which is predetermined between thereof. If deviation between the clutch stroke Yb(j), Yb(j-1) is exceeding the minimum gradient YG(i-1), the process is moved to a step 411. If deviation between the clutch stroke Yb(j), Yb(j-1) is not exceeding the minimum gradient YG(i-1), the process is moved to a step 410, and the clutch stroke Yb(j) is replaced the sum of the clutch stroke Yb(j-1) and the minimum gradient YG(i-1). Then the process is moved to a step 411.

Then, the ECU 50 changes the map point counter j in increment of 1 at the step 411. The process is returned to the step 402 shown in FIG. 9, and after that, the process is repeated. According to this process repeating, at the step 402, when decision is executed that the map point counter j is exceeding the predetermined value Jc and the clutch stroke Yb(j) is calculated for all predetermined clutch torque T(j), the process is returned to the routine shown in FIG. 6.

In the step 204 subroutine, calculation of the clutch stroke Yb(j) which is intended to replace as new clutch stroke Y(j) is executed corresponding to each predetermined clutch torque T(j). This clutch stroke Yb(j) is replaced as new clutch stroke Y(j) in the routine shown in FIG. 6 (step 206), and clutch torque map is corrected and used to subsequent feedback control.

As stated above, following results may be obtained according to the first embodiment.

(1) In the first embodiment, the clutch torque correction rate Kh is calculated to moderate the deviation between the target clutch torque (predetermined) and the estimated clutch torque. In addition, the reflection rate N(i) (i is integer number) for reflecting the clutch torque correction rate Kh is defined for each predetermined clutch torque T(i) in response to the deviation X(i) between the predetermined clutch torque T(i) and the average value of the target clutch torque Tr_tmp which is set within predetermined time period. Then, the clutch torque correction modulus Kc (i) is calculated for each predetermined clutch torque T(i). Based on this clutch torque correction modulus Kc(i), the clutch stoke Y(i) (Yb(i)) is corrected for each corresponding predetermined clutch torque T(i), and then the clutch torque map is corrected. The target clutch stroke corresponding to the target clutch torque which is set based on the clutch torque map corrected. To fit the target clutch stroke, the clutch actuator 23 is activated with controlling. Therefore, clutch torque can be adequately controlled in response to property change of the clutch.

In particular, by controlling clutch torque to match the target clutch torque with correcting whole clutch torque map, the clutch can be controlled in proportion to property change of the clutch even if current clutch property is changed from the initial clutch torque map stored in the ROM.

In addition, since deviation between the target clutch torque and the estimated clutch torque is derived with referring to the clutch torque map which is previously corrected, resolution of the corrected clutch torque map may be improved compared with that the deviation between the target clutch torque and the estimated clutch torque is derived with referring to the initial clutch torque map stored in the ROM.

(2) In the first embodiment, gradient of the clutch torque map formed between continuous predetermined clutch torque T(i), T(i-1) is limited within a condition (Yb(i) - Yb(i-1) > YG(i-1)) for correcting the clutch torque map. Accordingly, monotonous increasing of the clutch stroke with increasing of the clutch torque is secured. It may prevent uncomfortable feeling with clutch operation; for example, clutch torque does not increased even if the clutch is engaged condition.

(3) In the first embodiment, the clutch torque correction rate Kh is calculated based on the integrated value Sr of the target clutch stroke Sr_tmp and the integrated value Sc of the estimated clutch stroke Sc_tmp within predetermined time period (i $\leqq$ Ic). Therefore, it may prevent that temporal deviation between target clutch torque and estimated clutch torque causes correction of clutch torque map.

(4) In the first embodiment, the clutch torque correction rate Kh is calculated only when the accelerated velocity of engine rotation rpm is stable, and the engine water temperature Tw is higher than predetermined temperature Tw1, and asynchronous condition of the clutch is continued for predetermined time period.

(Second embodiment)

Hereinafter, a second embodiment according to the present invention will be explained. In the second embodiment, only calculation of the reflection rate (see FIG. 3 and steps 404 - 406 shown in FIG. 9) is changed in response to the clutch torque value at the learning point, and the other configuration is equivalent. Therefore, detailed explanation for the equivalent portion is abbreviated. Calculation (correction) of the reflection rate in response to the clutch torque value at the learning point is executed by an ECU 50. The ECU 50 according to the second embodiment includes a reflection rate correcting means in conjunction with other configuration.

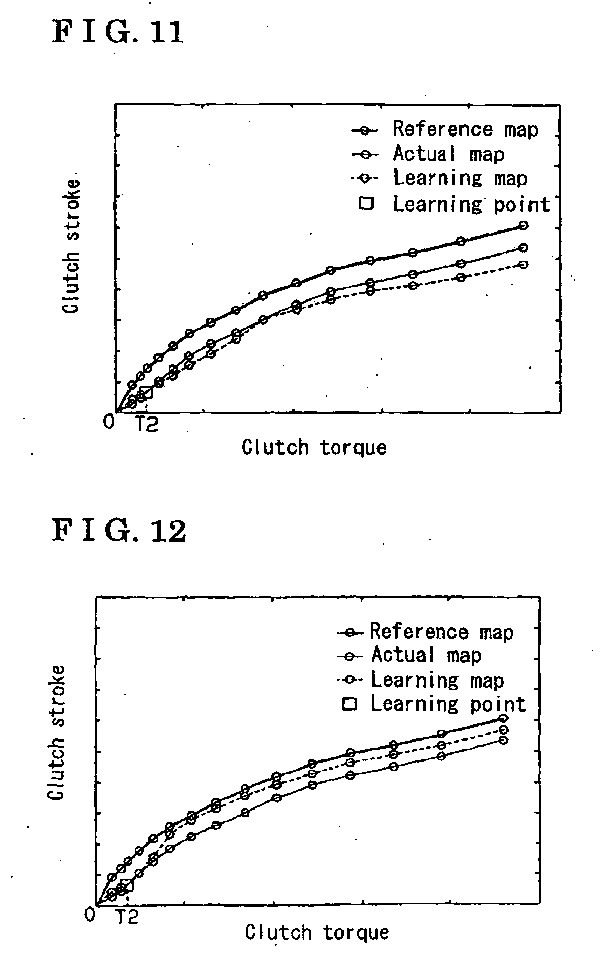

Following explains a case wherein calculation of the reflection rate is executed without reference to value at the learning point. In FIG. 11, a heavy solid line corresponds to a reference clutch torque map (initial clutch torque map, referred to as reference map in FIG. 11) which is a condition before replacing, and a thin solid line corresponds to an actual clutch torque map (referred to as actual map in FIG. 11) which is a target to converge from the reference clutch torque map. In addition, broken line corresponds to a learned clutch torque map (referred to as learning map in FIG. 11) which is corrected. Assuming that learning points continuously exists in the vicinity of a position corresponding to predetermined clutch stroke T2 (T2 < T1), learned points are shown in a square symbol. The leaning correction shown in FIG. 11 is executed when whole the actual clutch torque map is shifted in approximately parallel to the reference clutch torque map in clutch stroke direction. It has been confirmed that this parallel shift gets considerable with changing clutch temperature.

When this parallel shift is occurring in clutch stroke direction, percentage of this shift is higher in higher clutch torque region than lower clutch torque region even if displacement in clutch stroke direction is equivalent whole range of the actual clutch torque map. Therefore, effectiveness of the reflection rate to the clutch torque correction modulus Kc(i) is changed in response to the clutch torque value at the learning point (predetermined point). The clutch torque correction modulus Kc(i) is used to correction of the clutch torque map.

Therefore, when calculation of the reflection rate is uniformly executed without referring the clutch torque value at the learning point, the reflection rate is repressed in response to deviation from the learning point. But, learning correction in low clutch torque region is excessively reflected up until high clutch torque region. Therefore, the learning clutch torque map is excessively corrected over the actual clutch torque map.

When excessive learning is executed in high clutch torque region like this, feeling at shift change operation may change to the worse since gearshift shock may be caused by clutch slipping. In this condition, clutch stroke corresponding to the predetermined clutch torque is calculated insufficiently.

In consideration of this kind of situation, calculation of the reflection rate is changed in response to value of clutch torque at the learning point in the second embodiment.

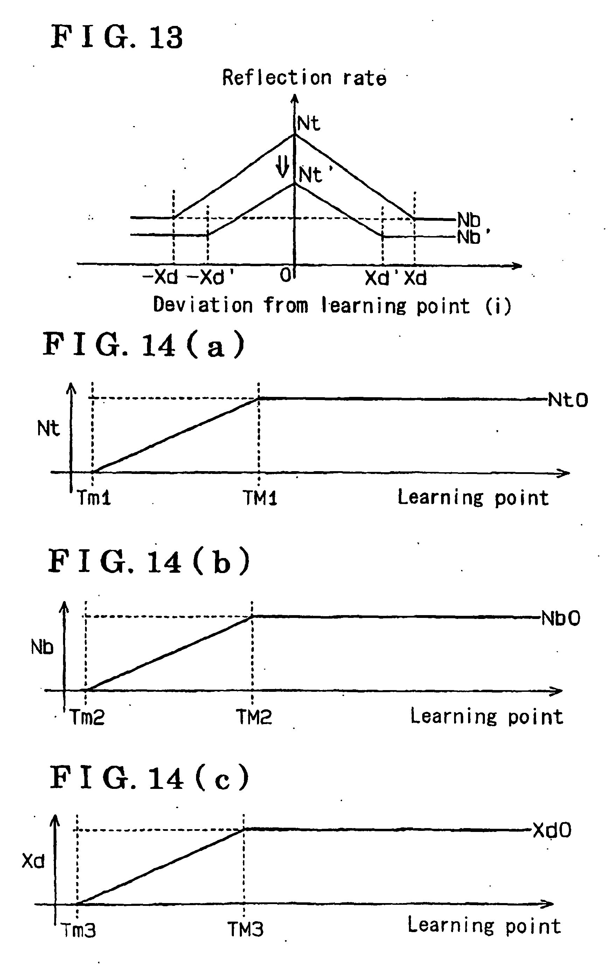

FIG. 13 is a graph showing relationship between the deviation from the learning point X(i) and the reflection rate. FIG. 14 shows graphs showing relationship between the learning point, maximum reflection rate Nt, minimum reflection rate Nb, and the reflection deviation Xd for defining the relationship shown in FIG. 13. As shown in FIG. 14(a), the maximum reflection rate Nt proportionally increases with increasing the clutch torque value at the learning point between the predetermined clutch torques Tm1, TM1 wherein clutch torque at the learning point is low in the region defined between the predetermined clutch torques Tm1, TM1. When clutch torque at the learning point exceeds the predetermined clutch torque TM1, the clutch torque is kept to a predetermined value Nt0.

In addition, as shown in FIG. 14(b), the minimum reflection rate Nb proportionally increases with increasing the clutch torque value at the learning point between the predetermined clutch torques Tm2, TM2 wherein clutch torque at the learning point is low in the region defined between the predetermined clutch torques Tm2, TM2. When clutch torque at the learning point exceeds the predetermined clutch torque TM2, the clutch torque is kept to a predetermined value Nb0.

In addition, as shown in FIG. 14(c), the minimum reflection rate Xd proportionally increases with increasing the clutch torque value at the learning point between the predetermined clutch torques Tm3, TM3 wherein clutch torque at the learning point is low in the region defined between the predetermined clutch torques Tm3, TM3. When clutch torque at the learning point exceeds the predetermined clutch torque TM3, the clutch torque is kept to a predetermined value Xd0.

Assuming that the maximum reflection rate Nt, the minimum reflection rate Nb, and the reflection deviation Xd are set corresponding to a first learning point, respectively, and a maximum reflection rate Nt', a minimum reflection rate Nb', and a reflection deviation Xd' are set corresponding to a second learning point, respectively as shown in FIG. 13. Clutch torque of the second learning point is lower than that of the first learning point. In this condition, relation of each modulus shows Nt>Nt', Nb>Nb', and Nd>Nd'. In addition, each modulus are repressed in proportion to lowering clutch torque at the learning point, and the reflection rate is corrected and set to reduce effective range.

Based on the reflection rate corrected/set in this manner, the reflection rate N(i) is calculated for each predetermined clutch torque T(i) according to the process steps 404 - 406 shown in FIG. 9, and used for learning correction of the clutch torque map as same as the first embodiment.

According to the second embodiment, even if learning correction is executed when whole the actual clutch torque map is shifted in approximately parallel to the reference clutch torque map in clutch stroke direction, excessive learning in high clutch torque region may be repressed as shown in FIG. 12.

According to the second embodiment, following effect may be achieved in addition to the first embodiment thereof.

Namely, the reflection rate is corrected in response to clutch torque value at the learning point in the second embodiment. Therefore, this method may moderate effectiveness change of the value at the learning point to the clutch torque correction modulus Kc(i) (namely, clutch torque map). In addition, the clutch torque map may be learned with repressing excessive learning in high clutch torque region. In particular, this method according to the second embodiment may repress excessive learning in high clutch torque region with learning in low clutch torque region. Therefore, insufficient calculation of clutch stroke corresponding to the predetermined clutch torque may be repressed, and it may prevent uncomfortable feeling at shift change operation such as gearshift shock caused by clutch slipping.

Embodiment according to the present invention is not restricted to embodiments mentioned above. Following modification may be applicable.

Maps used to correct the reflection rate in response to value at the learning point can be freely designed. The map used in the second embodiment shown in FIG. 14 is an example which has proportional relation in low clutch torque region and constant predetermined value in high clutch torque region.

For example, the clutch torque correction rate Kh may be derived by calculating a ratio of an average value of the target clutch stroke Sr_tmp within a predetermined time period (i ≤ Ic) to an average value of the estimated clutch stroke Sc_tmp. These average values may be geometrical average and harmonic average in addition to arithmetic average.

A deviation between the integrated value of the estimated clutch stroke Sc and the integrated value of the target clutch stroke Sr may be used as another example of the first correction modulus.

Interpolation of each map point in the clutch torque map may be acceptable for various interpolating method in addition to linear interpolation.

Controlling of clutch torque may be conducted by using a clutch actuator for actuating the release bearing 27, the diaphragm spring 28, or the pressure plate 29.

The principles, a preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

**Claims**

1. A clutch control device for controlling a clutch torque transmitted from an engine to a transmission by a clutch (21) disposed between the engine (10) and the transmission (30), comprising:

   an electric control unit (50) storing a reference map and an actual map, and determining a target clutch torque, and
   an actuator (23) controlled by the electric control unit based on the actual map and controlling a control amount for the target clutch torque transmitted from the engine to the transmission,
   **characterized in that**
   the reference map defines a relationship between an initial target clutch torque and the control amount of the actuator;
   the actual map defines a relationship between an actual clutch torque and
   the control amount of the actuator;
   the electric control unit (50) includes
   a first calculation means for calculating a first correction modulus indicating a deviation between the target clutch torque and an estimated clutch torque which is the actual clutch torque transmitted from the engine to the transmission at a predetermined point of the predetermined control amount of the actuator in the actual map;
   a second calculation means for calculating a second correction modulus based on the first correction modulus and a deviation from the predetermined point in the actual map; and
   a correction means for correcting the actual map with the first correction modulus and the second correction modulus to learn a next actual map from the reference map.

2. A clutch control device according to claim 1, wherein the correction means corrects the clutch torque map by setting a limit to gradient of the clutch torque map formed between each adjacent predetermined clutch torque.

3. A clutch control device according to claim 1 or 2, wherein the first calculation means calculates the first correcting modulus by using the control amount of the actuator (23) based on the clutch torque map corresponding to an average of the target clutch torque in a predetermined time period and the control amount of the actuator (23) based on the clutch torque map corresponding to an average of the estimated clutch torque outputted when the actuator (23) is activated and controlled to obtain the target control amount.

4. A clutch control device according to claim 1 or 2, wherein the first correction modulus is calculated when the engine rotates with a predetermined rpm for a predetermined time period.

5. A clutch control device according to one of claims 1-4, wherein the clutch control device comprising a correction means for correcting a deviation from the predetermined point of the actual map in response to the clutch torque value at the predetermined point.

6. A clutch control device according to claim 1-5, wherein correction of the clutch torque map is calculated when the clutch (21) is completely engaged or completely disengaged.

**Patentansprüche**

1. Kupplungssteuervorrichtung zum Steuern eines von einem Motor zu einem Getriebe übertragenen Kupplungsmoments mittels einer zwischen dem Motor (10) und dem Getriebe 30 angeordneten Kupplung (21), enthaltend:

   eine elektrische Steuereinheit (50), die eine Referenzkennlinie und eine aktuelle Kennlinie speichert und ein Zielkupplungsmoment bestimmt, und
   ein Stellglied (23), das von der elektrischen Steuereinheit basierend auf der aktuellen Kennlinie gesteuert wird und eine Steuergröße für das Zielkupplungsmoment steuert, das von dem Motor zu dem Getriebe übertragen wird,

**dadurch gekennzeichnet dass**,

die Referenzkennlinie eine Beziehung zwischen einem anfänglichen Zielkupplungsmoment und der Steuergröße des Stellgliedes definiert;

die aktuelle Kennlinie eine Beziehung zwischen einem aktuellen Kupplungsmoment und der Steuergröße des Stellgliedes definiert;

die elektrische Steuereinheit (50) enthält

eine erste Berechnungseinrichtung zum Berechnen eines ersten Korrekturmoduls, der eine Abweichung zwischen dem Zielkupplungsmoment und einem geschätzten Kupplungsmoment anzeigt, das das aktuelle Kupplungsmoment ist, das von dem Motor zu dem Getriebe an einer vorbestimmten Stelle der vorbestimmten Steuergröße des Stellgliedes in der aktuellen Kennlinie ist;

eine zweite Berechnungseinrichtung zum Berechnen eines zweiten Korrekturmoduls, basierend auf dem ersten Korrekturmodul und einer Abweichung von der vorbestimmten Stelle in der aktuellen Kennlinie; und

eine Korrektureinrichtung zum Korrigieren der aktuellen Kennlinie mit dem ersten Korrekturmodul und dem zweiten Korrekturmodul, um eine nächste aktuelle Kennlinie von der Referenzkennlinie zu lernen.

2.  Kupplungssteuervorrichtung nach Anspruch 1, wobei die Korrektureinrichtung die Kupplungsmomentkennlinie korrigiert, indem ein Grenzwert für einen Gradienten der Kupplungsmomentkennlinie gesetzt wird, der zwischen jedem benachbarten vorbestimmten Kupplungsmoment ausgebildet ist.

3.  Kupplungssteuervorrichtung nach Anspruch 1 oder 2, wobei die erste Berechnungseinrichtung den ersten Korrekturmodul berechnet unter Verwendung der Steuergröße des Stellgliedes (23), basierend auf der Kupplungsmomentkennlinie, die einem Durchschnitt des Zielkupplungsmoments während einer vorbestimmten Zeitdauer entspricht, und der Steuergröße des Stellgliedes 23, basierend auf der Kupplungsmomentkennlinie, die einem Mittelwert des geschätzten Kupplungsmoments entspricht, das ausgegeben wird, wenn das Stellglied 23 aktiviert und gesteuert wird, um die Zielsteuergröße zu erreichen.

4.  Kupplungssteuervorrichtung nach Anspruch 1 oder 2, wobei der erste Korrekturmodul berechnet wird, wenn der Motor während einer vorbestimmten Zeitdauer mit einer vorbestimmten Drehzahl dreht.

5.  Kupplungssteuervorrichtung nach einem Ansprüche 1 bis 4, wobei die Kupplungssteuervorrichtung eine Korrektureinrichtung zum Korrigieren einer Abweichung von der vorbestimmten Stelle der aktuellen Kennlinie in Reaktion auf dem Kupplungsmomentwert an der vorbestimmten Stelle enthält.

6.  Kupplungssteuervorrichtung nach einem Anspruch 1 bis 5, wobei eine Korrektur der Kupplungsmomentkennlinie berechnet wird, wenn die Kupplung 21 vollständig eingerückt oder vollständig ausgerückt ist.


**Revendications**

1.  Dispositif de commande d'embrayage pour commander un couple d'embrayage qui est transmis depuis un moteur à une transmission par un embrayage (21) qui est disposé entre le moteur (10) et la transmission (30), comprenant :

une unité de commande électrique (50) qui stocke une carte de référence et une carte réelle et qui détermine un couple d'embrayage cible ; et

un actionneur (23) qui est commandé par l'unité de commande électrique sur la base de la carte réelle et qui commande une valeur de commande pour le couple d'embrayage cible transmis depuis le moteur à la transmission,

**caractérisé en ce que** :

la carte de référence définit une relation entre un couple d'embrayage cible initial et la valeur de commande de l'actionneur ;

la carte réelle définit une relation entre un couple d'embrayage réel et la valeur de commande de l'actionneur ;

l'unité de commande électrique (50) inclut :

un premier moyen de calcul pour calculer un premier module de correction représentant une déviation entre le couple d'embrayage cible et un couple d'embrayage estimé qui est le couple d'embrayage réel transmis depuis le moteur à la transmission en un point prédéterminé de la valeur de commande prédéterminée de l'actionneur dans la carte réelle ;
un second moyen de calcul pour calculer un second module de correction sur la base du premier module de correction et d'une déviation par rapport au point prédéterminé dans la carte réelle ; et
un moyen de correction pour corriger la carte réelle avec le premier module de correction et le second module de correction afin d'apprendre une carte réelle suivante à partir de la carte de référence.

2. Dispositif de commande d'embrayage selon la revendication 1, dans lequel le moyen de correction corrige la carte de couples d'embrayage en établissant une limite à un gradient de la carte de couples d'embrayage formé entre chaque couple d'embrayage prédéterminé adjacent.

3. Dispositif de commande d'embrayage selon la revendication 1 ou 2, dans lequel le premier moyen de calcul calcule le premier module de correction en utilisant la valeur de commande de l'actionneur (23) sur la base de la carte de couples d'embrayage en correspondance avec une moyenne du couple d'embrayage cible dans une période temporelle prédéterminée et la valeur de commande de l'actionneur (23) sur la base de la carte de couples d'embrayage en correspondance avec une moyenne du couple d'embrayage estimé émis en sortie lorsque l'actionneur (23) est activé et commandé pour obtenir la valeur de commande cible.

4. Dispositif de commande d'embrayage selon la revendication 1 ou 2, dans lequel le premier module de correction est calculé lorsque le moteur tourne à un nombre de tours par minute prédéterminé pendant une période temporelle prédéterminée.

5. Dispositif de commande d'embrayage selon l'une des revendications 1 à 4, dans lequel le dispositif de commande d'embrayage comprend un moyen de correction pour corriger une déviation par rapport au point prédéterminé de la carte réelle en réponse à la valeur de couple d'embrayage au point prédéterminé.

6. Dispositif de commande d'embrayage selon l'une des revendications 1 à 5, dans lequel la correction de la carte de couples d'embrayage est calculée lorsque l'embrayage (21) est complètement en prise ou complètement désengagé.

**F I G. 1**

# FIG. 2

# FIG. 3

Nt: Maximum reflection rate
Nb: Minimum reflection rate
Xd: Reflection deviation

# FIG. 4

Reference map
Actual map
Learning map
Learning point

Clutch stroke

Clutch torque

0  T1

Clutch stroke

0  T1

Clutch torque

0  T1

# F I G. 5

```
        ╭─────────────────────────╮
        │   Clutch torque control │
        ╰─────────────────────────╯
                     │
                     ▼
        ┌─────────────────────────┐
        │   Predetermined clutch  │ ～ 101
        │    torque calculation   │
        └─────────────────────────┘
                     │
                     ▼
        ┌─────────────────────────┐
        ║   Clutch torque map     ║ ～ 102
        ║     calculation         ║
        └─────────────────────────┘
                     │
                     ▼
        ┌─────────────────────────┐
        │   Predetermined clutch  │ ～ 103
        │    stroke calculation   │
        └─────────────────────────┘
                     │
                     ▼
        ┌─────────────────────────┐
        ║  Feedback control of    ║ ～ 104
        ║    clutch stroke        ║
        └─────────────────────────┘
                     │
                     ▼
        ╭─────────────────────────╮
        │          End            │
        ╰─────────────────────────╯
```

# FIG. 6

```
         ╭─────────────────────────╮
         │   Clutch torque map     │ ～～ 102
         │      calculation        │
         ╰─────────────────────────╯
                     │
                     ▼
    No   ╱────────────────────────╲
    ◄────    Learning complete      ╲ ～～ 201
         ╲    flag OFF ?           ╱
          ╲──────────────────────╱
                     │ Yes
                     ▼
         ┌─────────────────────────┐
         │ Clutch torque correction│ ～～ 202
         │    rate calculation     │
         └─────────────────────────┘
                     │
                     ▼
          ╱──────────────────────╲  ～～ .203
         ╱  Learning approve flag  ╲         No
         ╲      ON ?              ╱  ───────►
          ╲──────────────────────╱
                     │ Yes   ～～ 204
                     ▼
         ┌─────────────────────────┐
         │ Clutch torque correction│
         │    amount calculation   │
         └─────────────────────────┘
                     │
                     ▼  ～～ 205
    No    ╱────────────────────────╲
    ◄─────   Is clutch completely    ╲
         ╲ engaged condition or completely
          ╲  disengaged condition ?  ╱
           ╲────────────────────────╱
                     │ Yes
                     ▼
         ┌─────────────────────────┐
         │ Replacement of clutch   │ ～～ 206
         │     torque map          │
         └─────────────────────────┘
                     │
   ┌──────────────┐  ▼  ┌──────────────┐
   │  Learning    │     │  Learning    │
   │complete flag │～208│complete flag │～207
   │    ON ?      │     │   OFF ?      │
   └──────────────┘     └──────────────┘
                     │
                     ▼
            ╭─────────────────╮
            │     Return      │
            ╰─────────────────╯
```

# FIG. 7

```
            ╭─────────────────────────╮
            │  Clutch torque correction │ ～ 202
            │     rate calculation      │
            ╰─────────────────────────╯
                        │
                        ▼                    ～ 301
            ◇ Learning condition flag ON ? ◇───No────────┐      303
                        │                                 ▼       ～
                       Yes                    ┌─────────────────────────┐
       302 ～  ┌──────────────────┐           │       Buffering          │
              │    i increment    │           │   initialization of     │
              └──────────────────┘           │   number of learning    │
                        │                     │  approved condition i=0  │
                        │◄────────────────────└─────────────────────────┘
                        ▼
            ┌──────────────────────────┐
            │ Acceleration calculation of │ ～ 304
            │     engine rpm dNe/dt     │
            └──────────────────────────┘
                        │
                        ▼                         ～ 305
            ◇   Is dNe/dt stable ?    ◇────No──────────────────┐
            ◇  △N1<dNe/dt<△N2 ?     ◇                          │
                        │                                        │
                       Yes                ～ 306                  │
            ◇ Engine water temperature > Tw1 ? ◇───No──────────►│
                        │                                        │
                       Yes                                       │
                        ▼          ～ 307                         │
            ◇     Asynchronous ?    ◇────No───────────────────►│
                        │                                        │
                       Yes                                       │
                        ▼                                        ▼
                       (1)                                      (2)
```

# FIG. 8

①　→　308 ⌇　Learning condition flag ON ?

②　→　314 ⌇　Learning condition flag OFF ?

309 ⌇　Predetermined clutch stroke, Sr_tmp calculation & integration Sr= Sr+Sr_tmp

310 ⌇　Estimated clutch stroke, Sc_tmp calculation & integration Sc= Sc+Sc_tmp

311 ⌇　Is it stable over designated time period ? i≧Ic ?　No

Yes

312 ⌇　Learning approve flag ON ?

313 ⌇　Calculation of clutch torque correction rate Kh Kh=Sc/Sr

Return

# FIG. 9

Clutch torque correction rate calculation ～ 204

↓

Counter initialization ～ 401

③ →

⟨ j≦Jc ? ⟩ ～ 402 → No → Return

Yes ↓

Calculation of deviation from learning point X(j) ～ 403

↓

⟨ X(j)<Xd ? ⟩ ～ 404

No → N(j)=Nb （406）

Yes ↓

Calculation of reflection rate N(j)=DIV*X(j)+Nt ～ 405

↓

④

# FIG. 10

④

↓

407 — Correction amount calculation
$K(j)=1+(Kh-1)N(j)$

↓

408 — New mapping point calculation
$Yb(j)=Y(j)*Kc(j)$

↓

409 — Checking of monotonous increasing
$Yb(j)-Yb(j-1)>YG(j-1)$ ?

No →

Replacement
$Yb(j)=Yb(j-1)+YG(j-1)$ — 410

Yes

411 — j increment

↓

③

## F I G. 11

Reference map
Actual map
Learning map
Learning point

Clutch stroke

Clutch torque

0  T2

## F I G. 12

Reference map
Actual map
Learning map
Learning point

Clutch stroke

Clutch torque

0  T2

F I G. 13

Reflection rate

Nt

↓ Nt'

Nb
Nb'

−Xd  −Xd'    0    Xd' Xd

Deviation from learning point (i)

F I G. 14 ( a )

Nt

NtO

Tm1        TM1        Learning point

F I G. 14 ( b )

Nb

NbO

Tm2        TM2        Learning point

F I G. 14 ( c )

Xd

XdO

Tm3        TM3        Learning point